# EUROPEAN PATENT SPECIFICATION

(11) **EP 2 819 228 B1**
(45) Date of publication and mention of the grant of the patent: **21.09.2016**
(21) Application number: 14755962.9
(22) Date of filing: 14.01.2014
(51) Int. Cl.: H01M 8/02, H01M 8/10, H01M 8/24

(54) **SINGLE CELL MODULE FOR SOLID POLYMER FUEL CELLS, AND SOLID POLYMER FUEL CELL**
EINZELZELLENMODUL FÜR FESTPOLYMERBRENNSTOFFZELLEN UND FESTPOLYMERBRENNSTOFFZELLE
MODULE DE PILE UNIQUE POUR PILES À COMBUSTIBLE À POLYMÈRE SOLIDE, ET PILE À COMBUSTIBLE À POLYMÈRE SOLIDE

(30) Priority: 21.03.2013 JP 2013057608
(43) Date of publication of application: 31.12.2014
(73) Proprietor: Panasonic Intellectual Property Management Co., Ltd., Osaka-shi, Osaka 540-6207 (JP)
(72) Inventor: MORI, Masahiro, Osaka 540-6207 (JP); YOSHIMURA, Mitsuo, Osaka 540-6207 (JP); ISERI, Mitsuhiro, Osaka 540-6207 (JP)
(74) Representative: Schwabe - Sandmair - Marx
(86) International application number: PCT/JP2014/000117
(87) International publication number: WO 2014/147926

(56) References cited:
- WO-A2-02/27847
- DE-A1-102005 058 370
- DE-A1-102010 055 996
- JP-A- H07 235 314
- JP-A- H07 235 314
- JP-A- 2001 155 758
- JP-A- 2006 310 288
- JP-A- 2007 250 249
- JP-A- 2007 335 279
- JP-A- 2009 021 217
- JP-A- 2009 105 009
- JP-A- 2012 226 848
- US-A1- 2008 305 384

## Description

### Technical Field

The present invention relates to a single cell module for a polymer electrolyte fuel cell in which an electrolyte membrane is supported by frames formed of resin and sandwiched by separators including a sealing member, and a polymer electrolyte fuel cell including the single cell module.

### Background Art

A fuel cell has a configuration in which a required number of modules are stacked. In each single cell module, a catalytic layer and an electrolyte membrane that causes a power generation reaction are bonded with each other, and the catalytic layer and the electrolyte membrane are sandwiched by separators. The electrolyte membrane is mainly fixed to a resin frame member. This frame member makes it possible to improve handleability at the time of assembling by the sandwiching with the separators, and to reduce the amount of the electrolyte material of a non-power generation section.

To operate a fuel cell, it is necessary to supply fuel gas (hydrogen gas) to one of electrodes formed on the both sides of the electrolyte membrane, and oxygen (air) to the other of the electrodes, and when the gas on one side flows to the other side, normal electrochemical reaction does not take place and therefore sufficient power generation performance cannot be achieved. To avoid this, fuel cells need to have gas sealing performance at parts where the electrolyte membrane and frame body are fixed together.

An example of the conventional method for fixing an electrolyte membrane to a frame member uses ultrasound waves to weld an electrolyte membrane to a resin frame member (see, for example, PTL 1). FIGS. 5A and FIG. 5B illustrate a conventional method disclosed in PTL 1 for fixing an electrolyte membrane to a frame body. In FIG. 5A and FIG. 5B, electrolyte membrane 20 is sandwiched by frame members 100 from the both sides, and protrusions 112 provided in frame members 100 are welded through electrolyte membrane 20 by ultrasound welding, thereby fixing electrolyte membrane 20 to frame members 100.

Another example of the conventional method for fixing an electrolyte membrane to a frame member is a method in which a through-hole is provided in the electrolyte membrane in advance, and the through-hole is filled with a frame resin to fix the electrolyte membrane to the frame member (see, for example, PTL 2). FIG. 6 illustrates the conventional method disclosed in PTL 2 for fixing an electrolyte membrane to a frame body. In FIG. 6, electrolyte membrane 2 is sandwiched from the both sides by frame members 5 which have been softened by heat, so as to press electrolyte membrane 2. In this manner, the through-hole provided in electrolyte membrane 2 in advance is filled with the material of softened frame member 5, and the frame members 5 on both sides are welded through the through-hole, whereby electrolyte membrane 2 is fixed to frame members 5.

### Citation List

### Patent Literature

PTL 1 Japanese Patent Application Laid-Open No. 7-235314
PTL 2 Japanese Patent Application Laid-Open No. 2009-123381

### Summary of Invention

### Technical Problem

However, the configurations disclosed in PTLs 1 and 2 cannot ensure sufficient durability and gas sealing performance in regions near the power generation region or in regions near parts where the electrolyte membrane is fixed to the frame part, due to the high-temperature thermal history of the electrolyte membrane and to local concentration of stress on the electrolyte membrane, which is caused by dimensional changes in the electrolyte membrane in wet/dry conditions associated with the operation and stop of the fuel cell.

To be more specific, while in PTL 1 the electrolyte membrane is fixed to the frame member by ultrasound welding, the thickness of the electrolyte membrane is reduced in a region near the welding part because of the heat and vibration of the ultrasound welding. When the thickness of the electrolyte membrane is reduced, gas leakage through the membrane may easily occur, and sufficient power generation performance and durability cannot be obtained.

Further, in the configuration disclosed in PTL 1, the part of the electrolyte membrane where the thickness is reduced is exposed to oxidant gas and thus the electrolyte membrane is further degraded, causing gas leakage. In addition, when the part of the electrolyte membrane where the thickness is reduced is exposed to humidified fuel gas and oxidant gas supplied for power generation and the electrolyte membrane swells and contracts by absorbing water vapor of the humidified gas, mechanical stress is accumulated and the molecular structure is destructed, and consequently, the electrolyte membrane is fractured. Further, when the water generated during power generation reaches the thin part of the electrolyte membrane and the electrolyte membrane swells and contracts by absorbing the water, mechanical stress is accumulated and the molecular structure is destructed, and consequently, the electrolyte membrane is fractured.

In the configuration disclosed in PTL 2, while the frame member softened by heat is pressed against the electrolyte membrane for closely bonding the electrolyte membrane with the frame member, the electrolyte membrane is detached from the frame member when the electrolyte membrane swells and contracts in association with the power generation and stop of the fuel cell. In the configuration disclosed in PTL 2, when the electrolyte membrane is detached from the frame member, a space where gas can pass through is defined between the electrolyte membrane and the frame member, and the gas that has bypassed the penetrating hole and the end portion of the electrolyte membrane advances to the other side of the counter electrode. As a result, sufficient power generation performance cannot be obtained.

Further, due to the stress concentrated around the through-hole because of the dimensional changes in the electrolyte membrane in association with the operation and stop of the fuel cell, the electrolyte membrane is mechanically damaged and sufficient durability cannot be ensured.

An object of the present invention is to solve the above-mentioned problems pertinent in the art and to provide a single cell module for a polymer electrolyte fuel cell and a polymer electrolyte fuel cell which have sufficient durability and gas sealing performance.

### Solution to Problem

To achieve the above-mentioned object, a single cell module according to an embodiment of the present invention has a configuration in which a first frame and a second frame are fusion-bonded through an electrolyte membrane and the frames are sandwiched by separators in which sealing members are disposed on the power generation region side relative to the fusion bonding part.

With this configuration, the electrolyte membrane is fixed to the frame member at the fusion bonding part, and gas sealing performance is ensured by the sealing member provided on the power generation region side relative to the welding part. By providing the sealing member on power generation region side relative to the fusion bonding part where gas leakage easily occur, gas is prevented from reaching the fusion bonding part, and thus gas sealing performance can be ensured. In addition, by stacking the separator and the electrolyte membrane structure with the sealing member compressed at a certain rate, even when dimensional changes in the electrolyte membrane in wet/dry conditions in association with the operation and stop of the fuel cell have occurred, the pressure of the sealing part can be maintained at a certain value, and gas sealing performance can be ensured regardless of the thickness of the electrolyte membrane and thickness changes in the electrolyte membrane.

In addition, the single cell module of the embodiment of the present invention has a configuration in which electrolyte membrane material is mixed in the fusion bonding part of the first frame and the second frame.

With this configuration, unity between the frame member and the electrolyte membrane is improved, and the performance of fixing the electrolyte membrane to the frame member is improved.

In addition, the single cell module of the embodiment of the present invention has a configuration in which the boundary between the first frame and the second frame in communication with the end portion of the electrolyte membrane, and the fusion welding part are covered with a third frame.

Electrolyte membranes are degraded when exposed to the atmosphere for a long period of time. With the configuration described above, by sealing with the third frame the boundary between the first frame and the second frame in communication with the atmosphere, the amount of exposure of the end portion of the electrolyte membrane to the atmosphere can be reduced, and the durability of the electrolyte membrane can be maintained.

Further, by covering with the third frame the fusion bonding part of the first frame and the second frame where the electrolyte membrane materials are mixed so as not to expose the electrolyte membrane to the atmosphere, degradation of the electrolyte membrane in the region of the fusion bonding part can be prevented.

In addition, in the single cell module of the embodiment of the present invention, at least one of the first frame and the second frame is formed of the same material as the third frame.

With this configuration, the adhesion between the third frame and the first frame, or between the third frame and the second frame is further enhanced, and the rigidity of the frame member is improved, and consequently, handleability and dimensional accuracy of the electrolyte membrane structure can be improved.

In addition, in the single cell module of the embodiment of the present invention, the electrolyte membrane is sandwiched by the first frame and the second frame from the both sides, and an ultrasound welding horn is brought into contact with one of the frames, whereby the electrolyte membrane is fixed to the frame member by an ultrasound welding method.

With this configuration, it is possible to achieve the fusion welding while heating only the fusion bonding interface, and to minimize the influence of heat on surrounding regions, and consequently, the durability of the electrolyte membrane structure can be maintained.

In addition, in the single cell module of the embodiment of the present invention, the electrolyte membrane is sandwiched by the first frame and the second frame from the both sides, and a laser beam is applied to a fusion welding part from the side of one of the frames, whereby the electrolyte membrane is fixed to the frame member by a laser fusion bonding method.

With this configuration, it is possible to fusion-bond the electrolyte membrane and the frame member without contacting, and to prevent impurities from mixing in the fusion welding part, and consequently, the durability of the electrolyte membrane structure can be maintained.

In addition, in the single cell module of the embodiment of the present invention, the electrolyte membrane is sandwiched by the first frame and the second frame from the both sides, and, from the side of one of the frames, the fusion welding part is irradiated with a laser beam having such a wavelength that allows the laser beam to pass through the frame member and to be absorbed by the electrolyte membrane, so as to fix the electrolyte membrane to the frame member by a laser fusion bonding method.

With this configuration, it is possible to achieve the fusion welding while heating only the fusion bonding interface and to minimize the influence of heat on surrounding regions, and consequently, the durability of the electrolyte membrane structure can be maintained.

In addition, a fuel cell system of the embodiment of the present invention is a stack unit in which a plurality of the above-mentioned single cell modules are stacked.

With this configuration, a fuel cell system with excellent gas sealing performance and durability can be achieved.

### Advantageous Effects of Invention

As described above, according to a single cell module of a polymer electrolyte fuel cell and a polymer electrolyte fuel cell of the embodiment of the present invention, gas leakage in a single cell module can be limited, and performance of the fuel cell can be ensured.

### Brief Description of Drawings

FIG. 1 is a schematic view illustrating a fuel cell in an embodiment of the present invention;
FIG. 2 is a sectional view illustrating a single cell module in the embodiment of the present invention;
FIG. 3 is a plan view illustrating an electrolyte membrane structure in the embodiment of the present invention;
FIG. 4A is a schematic view illustrating an assembling step of the electrolyte membrane structure in the embodiment of the present invention;
FIG. 4B is a schematic view illustrating an assembling step of the electrolyte membrane structure in the embodiment of the present invention;
FIG. 4C is a schematic view illustrating an assembling step of the electrolyte membrane structure in the embodiment of the present invention;

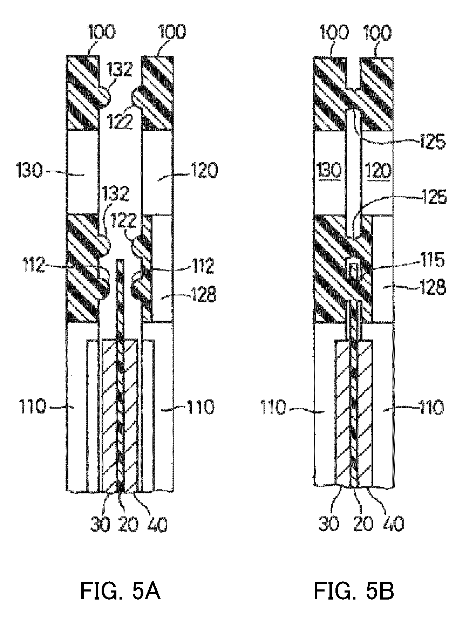

FIG. 5A is a schematic cross-sectional view illustrating a single cell structure disclosed in PTL 1;
FIG. 5B is a schematic cross-sectional view illustrating the single cell structure disclosed in PTL 1; and

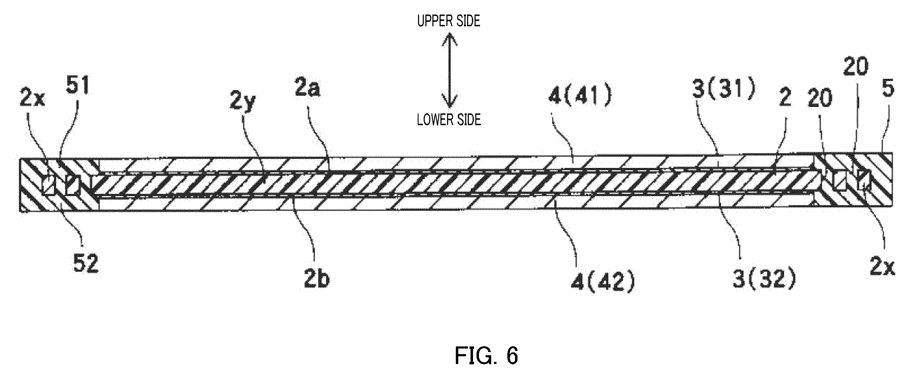

FIG. 6 is a schematic cross-sectional view illustrating a conventional electrolyte membrane structure disclosed in PTL 2.

### Description of Embodiments

In the following, an embodiment of the present invention will be described with reference to the accompanying drawings.

### (Embodiment)

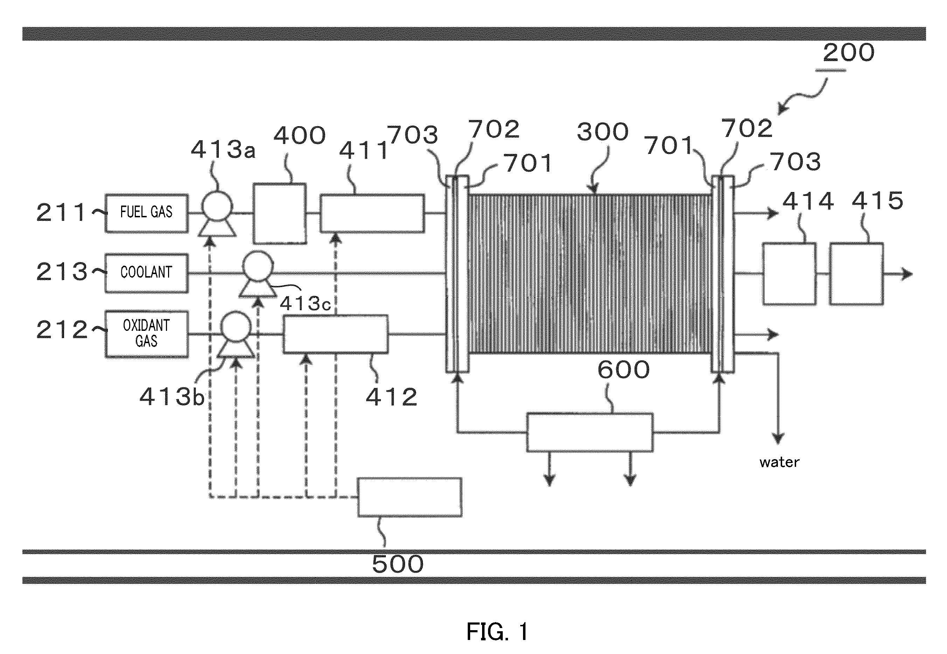

FIG. 1 is a schematic view illustrating a configuration of a polymer electrolyte fuel cell of an embodiment of the present invention.

In fuel cell 200, for example, fuel gas 211 containing hydrogen and oxidant gas 212 containing oxygen such as air are electrochemically reacted to simultaneously generate power, heat, and water.

Fuel cell 200 includes stack 300 in which a plurality of single cell modules 1 each having a pair of electrodes of anode and cathode are connected in series, fuel processor 400 that abstracts hydrogen from fuel gas 211, anode humidifier 411 that humidifies fuel gas containing hydrogen abstracted by fuel processor 400, cathode humidifier 412 that humidifies oxidant gas 212, and pumps 413a and 413b that respectively supply fuel gas 211 and oxidant gas 212.

In fuel cell 200, a fuel supply device in which fuel gas 211 is supplied to single cells is composed of fuel processor 400, anode humidifier 411, and pump 413a. In addition, an oxidant supply device that supplies oxidant gas to the single cells of stack 300 is composed of cathode humidifier 412 and pump 413b.

It is to be noted that the fuel supply device and the oxidant supply device may have any other configurations as long as they have a function to supply fuel and oxidant. In the present embodiment, as long as a supply device that commonly supplies fuel gas 211 and oxidant gas 212 to a plurality of single cells of stack 300 is provided, the effect of the present embodiment described later can be favorably achieved.

Fuel cell 200 includes pump 413c that circulates and supplies coolant 213 for efficiently removing heat generated in stack 300 during a power generation, heat exchanger 414 that exchanges heat removed by coolant 213 (for example, non-conductive liquid such as pure water) with fluid such as tap water, and hot water tank 415 that stores therein the tap water used for the heat exchanging. Further, fuel cell 200 includes operation control device 500 that associates the above-described components with one another and controls the operation for power generation, and electric output section 600 that takes out the electricity generated in stack 300.

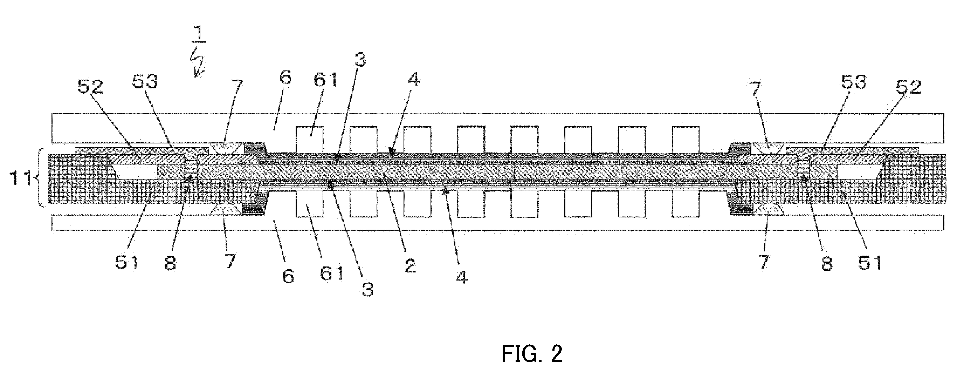

In stack 300, a plurality of single cell modules 1 (see FIG. 2) are stacked, and stack 300 is fastened by power collection plate 701, insulation plate 702, and end plate 703 from the both sides by a predetermined load. Each power collection plate 701 is provided with a current take-out section (not illustrated), and current, in other words, electricity is taken out from the current take-out section.

Each insulation plate 702 is used for the insulation between power collection plate 701 and end plate 703, and may be provided with an inlet (not illustrated) and an outlet (not illustrated) for gas and coolant. Each end plate 703 is held in such as manner as to fasten stacked single cell modules 1, power collection plate 701, and insulation plate 702 by using pressing means (not illustrated) at a predetermined load.

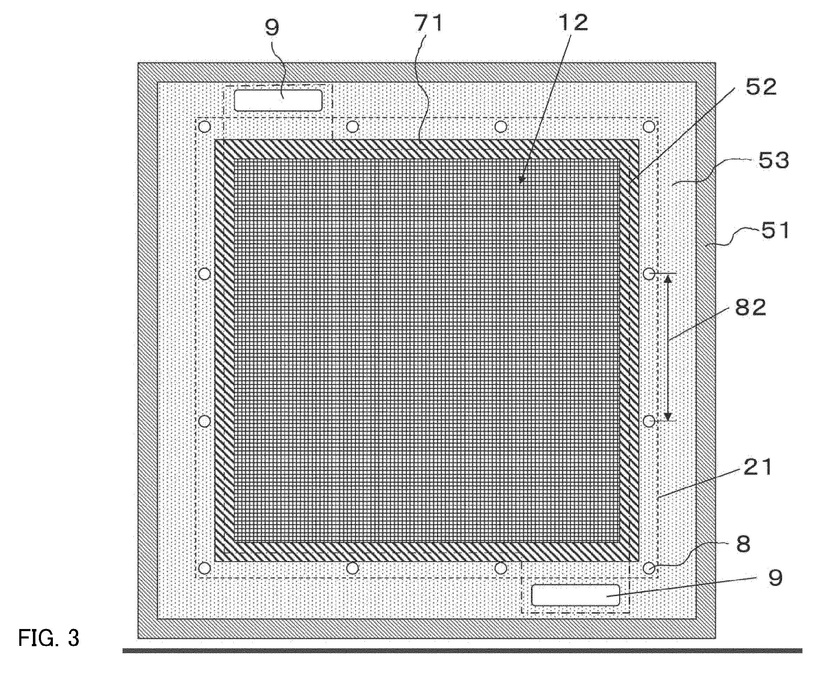

FIG. 2 is a sectional view illustrating single cell module 1 in which electrolyte membrane structure 11 of the embodiment of the present invention is sandwiched by separators 6 each provided with sealing member 7. FIG. 3 is a plan view as viewed from second frame member 52 side of electrolyte membrane structure 11 of the embodiment of the present invention.

In FIG. 2, electrolyte membrane structure 11 has a configuration in which end portions of electrolyte membrane 2 are each sandwiched by frame-shaped resin first frame member 51 and frame-shaped resin second frame member 52, first frame member 51 and second frame member 52 are bonded by fusion welding part 8 through electrolyte membrane 2, and the boundary between first frame member 51 and second frame member 52 and fusion welding part 8 are covered with third frame member 53 from the external side of second frame member 52. On the both sides of electrolyte membrane structure 11, gas diffusion layers 4 for uniformly providing fuel gas and oxidant gas to a catalyst are disposed, and the gas diffusion layers 4 are sandwiched by separators 6 each provided with sealing member 7 including gas channels 61, thus configuring single cell module 1.

In the present embodiment, while gas diffusion layers 4 are provided on first frame member 51 and second frame member 52 in such a manner as to fill the spaces defined between first frame member 51 and separator 6 and between second frame member 52 and separator 6, it is not necessary to fill the space with gas diffusion layer 4 when no space is defined between first frame member 51 and separator 6 and between second frame member 52 and separator 6.

When spaces are defined between first frame member 51 and separator 6 and between second frame member 52 and separator 6, fuel gas and oxidant gas do not pass through gas channel 61, while passing through the spaces between first frame member 51 and separator 6 and between second frame member 52 and separator 6. Consequently, the fuel gas and oxidant gas cannot be provided over power generation region 12, and sufficient power generation performance cannot be obtained. When the spaces between first frame member 51 and separator 6 and between second frame member 52 and separator 6 are filled with gas diffusion layer 4, the fuel gas and oxidant gas can pass through gas channel 61, and predetermined power generation performance can be obtained.

When the thickness of gas diffusion layer 4 in regions between first frame member 51 and separator 6 and between second frame member 52 and separator 6 is set to a value greater than the distances between first frame member 51 and separator 6 and between second frame member 52 and separator 6, gas diffusion layer 4 is compressed when electrolyte membrane structure 11 is sandwiched by separators 6, and thus first frame member 51 and second frame member 52 can be brought into close contact with electrolyte membrane 2.

When first frame member 51 and second frame member 52 are brought into close contact with electrolyte membrane 2, it is possible to limit the entering of fuel gas and oxidant gas into the spaces between electrolyte membrane 2 and first frame member 51 and between electrolyte membrane 2 and second frame member 52, and thus the gas barrier property can be improved. In addition, degradation of electrolyte membrane 2 due to the fuel gas and oxidant gas can be limited, and thus the performance of the fuel cell can be ensured for a long period of time.

In the present embodiment, catalytic layer electrodes 3 are uniformly formed on the both sides of electrolyte membrane 2 except for the end portions of electrolyte membrane 2. First frame member 51 and second frame member 52 are partly disposed on the both end portions of catalytic layer electrode 3. In this manner, it is possible to limit the exposure of oxidant gas in a region of electrolyte membrane 2 where catalytic layer electrode 3 is not formed, and consequently, it is possible to limit the degradation of electrolyte membrane due to oxidant gas.

When single cell module 1 is formed, sealing member 7 provided in separator 6 is disposed on the power generation region side relative to fusion welding part 8 formed in electrolyte membrane structure 11, and on the outer side relative to the region of catalytic layer electrode 3.

When single cell module 1 is completed, sealing members 7 provided in separators 6 make contact with first frame member 51 and second frame member 52, and are compressed.

This compression generates a reactive force of sealing member 7, and the adhesion between sealing member 7 and first and second frame members 51 and 52, and between first and second frame members 51 and 52 and electrolyte membrane 2 are improved, and consequently, a gas barrier property can be ensured.

Catalytic layer electrode 3 has a porous structure so as to allow fuel gas and air gas to diffuse therein and cause a power generation reaction. Therefore, when catalytic layer electrode 3 and sealing member contact part 71 overlap with each other, the porous part of catalytic layer electrode 3 cannot be shielded only by the reactive force of sealing member 7, and consequently gas leakage may be caused.

Sealing member 7 provided on first frame member 51 side and sealing member 7 provided on second frame member 52 side are disposed at positions facing each other with electrolyte membrane structure 11 therebetween, and sealing members 7 provided on the both sides do not overlap with catalytic layer electrode 3. However, sealing members 7 may not be disposed at positions facing each other, as long as a sufficient reactive force of sealing member 7 can be obtained. In addition, when at least one of sealing members 7 does not overlap with catalytic layer electrode 3, it suffices that a sufficient gas barrier property is ensured on the side of sealing member 7 which does not overlap with catalytic layer electrode 3.

When sealing members 7 are disposed in such a manner as to face each other, the reactive forces of sealing members 7 exerted on electrolyte membrane structure 11 oppose each other, and no stress is applied to electrolyte membrane structure 11. When sealing members 7 on the both sides do not overlap with catalytic layer electrode 3, the gas barrier property can be further ensured.

In the present embodiment, by providing sealing member 7 on power generation region 12 side relative to fusion welding part 8, it is possible to limit the exposure of a part of electrolyte membrane 2 deformed by heat and vibration of the ultrasound welding at the time of forming fusion welding part 8 to fuel gas, oxidant gas and water. Consequently, gas leakage can be reduced, and the power generation performance of the fuel cell can be maintained.

In addition, it is possible to reduce swelling and contracting due to absorption of moisture, to prevent the electrolyte membrane structure from being broken by preventing concentration of mechanical stress, and to maintain the fuel cell performance for a long period of time.

In FIG. 3, first frame member 51, second frame member 52 and third frame member 53 are provided in such a manner as to surround the four sides of electrolyte membrane 2, and fusion welding parts 8 are provided near electrolyte membrane end portion 21 of electrolyte membrane 2 at predetermined fusion welding part intervals 82.

In the present embodiment, an opening serving as power generation region 12 is provided at a center portion of first frame member 51. While the openings of first frame member 51 and second frame member 52 have the same size in the present embodiment, first frame member 51 and second frame member 52 may have openings of different sizes. When first frame member 51 and second frame member 52 have openings of the same size, the size of the region which can be used as power generation region 12 is increased, and a favorable utilization rate of the electrolyte membrane can be achieved. It suffices that electrolyte membrane 2 has a size greater than power generation region 12 and that electrolyte membrane 2 does not protrude from first frame member 51 and second frame member 52 when it is sandwiched by first frame member 51 and second frame member 52.

First frame member 51 to third frame member 53 include manifold 9 for supplying fuel gas or oxidant gas required for the power generation reaction of the fuel cell.

Sealing member 7 provided in separator 6 is disposed such that sealing member contact part 71 surrounds the entire region of power generation region 12 and gasket 9.

In the present embodiment, fusion welding part 8 of first frame member 51 and second frame member 52 is formed by ultrasound welding through electrolyte membrane 2. Second frame member 52 also includes an opening serving as power generation region 12 at a center portion thereof. When fusion welding part 8 between first frame member 51 and second frame member 52 is formed by ultrasound welding through electrolyte membrane 2, fusion welding part 8 can be formed in which the materials of first frame member, the second frame member, and the electrolyte membrane are mixed.

By forming fusion welding part 8 in which the materials of the frame members and the electrolyte membrane are mixed, the fixation of first frame member 51 and second frame member 52 to electrolyte membrane 2 can be further improved, and concentration of stress on electrolyte membrane 2 due to its dimensional changes in association with drying and wetting can be avoided. Consequently, the long-time durability of electrolyte membrane 2 can be further improved.

In the present embodiment, electrolyte membrane structure 11 is assembled in such a manner that third frame member 53 is so formed as to cover the boundary surface of first frame member 51 and second frame member 52 and machining marks of fusion welding part 8.

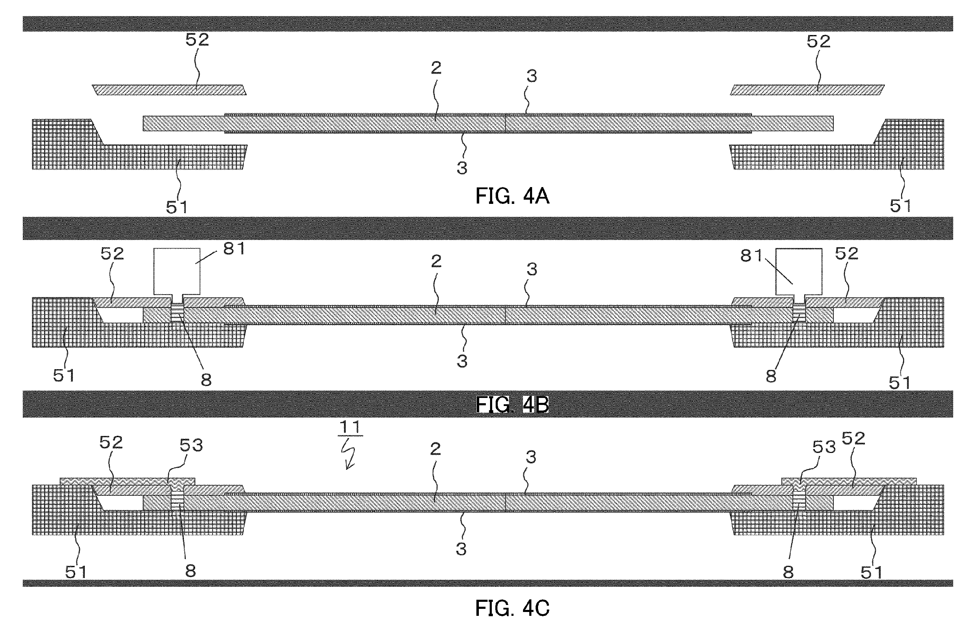

FIG. 4A, FIG. 4B, and FIG. 4C are schematic views illustrating assembling of the electrolyte membrane structure. First frame member 51 and second frame member 52 are produced by injection molding in advance, and electrolyte membrane 2 on which catalytic layer electrode 3 is applied is disposed on first frame member 51, and then second frame member 52 is disposed (FIG. 4A). Ultrasound horn 81 is brought into contact with a predetermined portion from the external side of second frame member 52 to form fusion welding part 8 (FIG. 4B). Electrolyte membrane 2 integrated with first frame member 51 and second frame member 52 is disposed in the metal mold of an injection molding machine to form third frame member 53 (FIG. 4C).

In the present embodiment, spot-shaped fusion welding parts 8 are formed. In the present embodiment, the ultrasound bonding was used to form fusion welding part 8. For the ultrasound bonding, a ultrasound welder (∑G620S) available from SEIDENSHA ELECTRONICS CO., LTD was used. The ultrasound machining tool which was brought into contact with the frame member has a tip end with a diameter of 0.5 mm. A favorable bonding was achieved under the following bonding condition at the time of the ultrasound bonding of the frame member: frequency of 28.5 kHz, amplitude of 40 µm, pressing force of 30N, and processing time of 0.25 seconds.

A fusion bonding method using a laser may be adopted to form fusion welding part 8 of the present embodiment. When using a laser, fusion welding part 8 can be formed without contacting, thus making it possible to prevent contamination that causes degradation of electrolyte membrane 2 in fusion welding part 8 in which frame member and electrolyte membrane are mixed. Consequently, the performance can be guaranteed for a long period of time.

It suffices to select a laser beam having such a wavelength that allows the laser beam to be absorbed by the frame members and the electrolyte membrane as the laser beam for the fusion bonding, it is preferable to use a laser beam having such a wavelength that allows the laser beam to pass through the frame member and to be absorbed by the electrolyte membrane. With this configuration, the laser beam passed through the frame member is absorbed by the electrolyte membrane, and the temperature of the part irradiated with the laser beam is increased. The heat thus generated can be used to fuse the frame members sandwiching the electrolyte membrane irradiated with the laser beam, and thus fusion bonding is achieved.

Since the energy consumed at the time of the fusion bonding can be minimized, the fusing time can be shortened, and thus productivity can be improved. Further, the size of the fusion welding part can be reduced, and the influence of heat on the electrolyte membrane can be reduced. Consequently, the performance of the electrolyte membrane can be ensured for a long period of time.

In the present embodiment, the interval between fusion welding part 8 and sealing member 7 is about 2 mm. The amount of the electrolyte membrane can be reduced in the region not contributing to the power generation when the interval between fusion welding part 8 and sealing member 7 is reduced. However, since electrolyte membrane 2 at and around a part to be processed is deformed by heat and vibration of the ultrasound bonding, it is preferable to dispose the deformed region of electrolyte membrane 2 on the inside relative to sealing member 7 with respect to the power generation face.

In the present embodiment, third frame member 53 is formed in such a manner that the frame member that covers the boundary surface between first frame member 51 and second frame member 52, and the frame member that covers the machining marks of fusion welding part 8 are integrated. In this state, the frame member that covers the boundary surface between first frame member 51 and second frame member 52, and the frame member that covers the machining marks of fusion welding part 8 may be formed as separate members, but when they are integrally formed, the rigidity of electrolyte membrane structure 11 is further improved, and handleability is enhanced.

As illustrated in FIG. 4B, while the ultrasound bonding is performed from second frame member 52 side, the ultrasound bonding may be performed from first frame member 51 side. In that case, it suffices to separate the cover frame member that covers the boundary between first frame member 51 and second frame member 52 and the frame member that covers the machining marks of fusion welding part 8, in third frame member 53.

In the present embodiment, first frame member 51, second frame member 52 and third frame member 53 are formed of the same resin material. As illustrated in FIGS. 4A to 4C, since third frame member 53 is directly formed on first frame member 51 and second frame member 52 by injection molding, the use of the same resin material can enhance the adhesion between the frame members and improve the integrity of electrolyte membrane structure 11, thus enhancing handleability.

In the present embodiment, a thermoplastic resin is used as the material of first frame member 51 and second frame member 52, and in particular, it is more preferable to use such materials as modified PPE, modified PPE and PPS since first frame member 51 and second frame member 52 are exposed to a power generation environment of the fuel cell.

While spot-shaped fusion welding parts 8 are formed in the present embodiment, linear fusion bonding parts may alternatively be formed, and fusion welding parts 8 may be provided in a non-intermittent manner.

When spot-shaped fusion welding parts 8 are adopted, the time for assembling electrolyte membrane structure 11 is shortened, and the productivity can be improved. In addition, when continuous or discontinuous fusion welding parts 8 are formed, the fixing strength of electrolyte membrane 2 to the frame member can be improved.

The form of the fusion welding part may be optimally selected in accordance with the assembling environment and the operation condition of the fuel cell.

In addition, since the present embodiment employed electrolyte membrane 2 having an isotropic property between vertical and lateral directions, which is not influenced by the equipment operation during membrane production, fusion welding part intervals 82 around the entirety of the power generation region are even. Electrolyte membrane 2 may be anisotropic between vertical and the lateral directions, and in the case where anisotropic electrolyte membrane 2 is adopted, the intervals may be adjusted in accordance with the property in the vertical direction and the property in the lateral direction. When fusion welding parts 8 are formed at even intervals, electrolyte membrane 2 can advantageously equalize the concentration of the stress exerted on fusion welding part 8 due to dry contraction or wet swelling.

In the present embodiment, sealing member 7 and electrolyte membrane end portion 21 are disposed close to each other as much as possible to reduce the amount of the electrolyte membrane not contributing to power generation. The interval between sealing member 7 and electrolyte membrane end portion 21 is not limited as long as electrolyte membrane 2 contracted by drying is not placed on the inside relative to sealing member 7, and when fusion welding part intervals 82 are great, it suffices to increase the interval between sealing member 7 and electrolyte membrane end portion 21 since the amount of displacement of electrolyte membrane 2 is increased at a part where electrolyte membrane 2 is not fusion-bonded. When the interval between sealing member 7 and electrolyte membrane end portion 21 is set to a great value, it is possible to increase the length of the leakage path of gas that bypasses electrolyte membrane end portion 21 and leaks from one electrode side to the other, and gas leakage can be advantageously reduced.

This application is entitled to and claims the benefit of Japanese Patent Application No. 2013-057608 filed on March 21, 2013.

### Industrial Applicability

According to the present invention, a single cell module can be manufactured which has high gas sealing performance and is less susceptible to dimensional changes in the electrolyte membrane. By using the electrolyte membrane structure and the single cell module, a polymer electrolyte fuel cell with high electrical performance and high durability can be provided. In addition, since an electrolyte membrane structure with high rigidity can be formed, it is possible to enhance the handleability at the time of assembling a single cell module and a stack.

### Reference Signs List

1 Single cell module
11 Electrolyte membrane structure
12 Power generation region
2, 20 Electrolyte membrane
21 Electrolyte membrane end portion
3 Catalytic layer electrode
4 Gas diffusion layer
5, 100 Frame member
51 First frame member
52 Second frame member
53 Third frame member
6 Separator
61 Gas channel
7 Sealing member
8 Fusion welding part
81 Ultrasound horn
82 Fusion welding part intervals
112 Protrusion
200 Fuel cell
211 Fuel gas
212 Oxidant gas
213 Coolant
300 Stack
400 Fuel processor
411 Anode humidifier
412 Cathode humidifier
413a Pump
413b Pump
413c Pump
414 Heat exchanger
415 Hot water tank
500 Operation control device
600 Electric output section

## Claims

1. A single cell module (1) for a polymer electrolyte fuel cell, having an electrolyte membrane structure (11) in which an outer periphery part of an electrolyte membrane (2) is sandwiched by a first frame (51) and a second frame (52), and a pair of separators (6) that sandwich the electrolyte membrane structure (11), wherein
welding parts (8) are formed in a surface of one of the first frame (51) and the second frame (52) in such a manner as to penetrate through the electrolyte membrane (2) and reach the other of the first frame (51) and the second frame (52),
sealing members (7) are part of the separators (6) and disposed on both surfaces of the first frame (51) and the second frame (52), and
the sealing members (7) are positioned between the welding parts (8) and a power generation region (12),
**characterized in that**
the welding parts (8) are configured to weld the first frame (51), the second frame (52) and the electrolyte membrane (2), and are provided in places at an outer periphery of the electrolyte membrane (2).

2. The single cell module (1) of the polymer electrolyte fuel cell according to claim 1, wherein, in the welding parts (8), materials of the first frame (51), the second frame (52), and the electrolyte membrane (2) are mixed.

3. The single cell module (1) of the polymer electrolyte fuel cell according to claim 1, wherein the welding parts (8) are covered with a third frame (53).

4. The single cell module (1) of the polymer electrolyte fuel cell according to claim 3, wherein at least two of the first frame (51), the second frame (52), and the third frame (53) are formed of the same resin material.

5. The single cell module (1) of the polymer electrolyte fuel cell according to claim 1, wherein fusion bonding of the first frame (51), the second frame (52) and the electrolyte membrane (2) is performed by ultrasound welding.

6. The single cell module (1) of the polymer electrolyte fuel cell according to claim 1, wherein fusion bonding of the first frame (51), the second frame (52) and the electrolyte membrane (2) is performed by using a laser.

7. The single cell module (1) of the polymer electrolyte fuel cell according to claim 6, wherein a laser beam used for the fusion bonding has a wavelength that allows the laser beam to pass through the first frame (51) or the second frame (52) and to be absorbed by the electrolyte membrane (2).

8. A polymer electrolyte fuel cell (200) that is assembled by stacking a plurality of cell modules (1), each cell module (1) being **characterized by** the features of claim 1.

## Patentansprüche

1. Einzellenmodul (1) für eine Polymerelektrolytbrennstoffzelle mit einer Elektrolytmembranstruktur (11), in der ein Außenumfangsteil einer Elektrolytmembran (2) von einem ersten Rahmen (51) und einem zweiten Rahmen (52) zusammengepresst wird, und einem Paar an Separatoren (6), die die Elektrolytmembranstruktur (11) zusammenpressen, wobei
Schweißteile (8) auf einer Oberfläche eines des ersten Rahmens (51) und des zweiten Rahmens (52) auf eine solche Art gebildet werden, dass sie die Elektrolytmembran (2) durchdringen und den jeweils anderen des ersten Rahmens (51) und des zweiten Rahmens (52) erreichen,
Dichtelemente (7) Teil der Separatoren (6) sind und auf beiden Oberflächen des ersten Rahmens (51) und des zweiten Rahmens (52) angeordnet sind und
die Dichtelemente (7) zwischen den Schweißteilen (8) und einem Leistungserzeugungsbereich (12) positioniert sind,
**gekennzeichnet dadurch, dass**
die Schweißteile (8) konfiguriert sind, den ersten Rahmen (51), den zweiten Rahmen (52) und die Elektrolytmembran (2) zu schweißen und an Orten an einem Außenumfang der Elektrolytmembran (2) bereitgestellt sind.

2. Einzellenmodul (1) der Polymerelektrolytbrennstoffzelle nach Anspruch 1, wobei in den Schweißteilen (8) Materialien des ersten Rahmens (51), des zweiten Rahmens (52) und der Elektrolytmembran (2) gemischt sind.

3. Einzellenmodul (1) der Polymerelektrolytbrennstoffzelle nach Anspruch 1, wobei die Schweißteile (8) mit einem dritten Rahmen (53) bedeckt sind.

4. Einzellenmodul (1) der Polymerelektrolytbrennstoffzelle nach Anspruch 3, wobei zumindest zwei des ersten Rahmens (51), des zweiten Rahmens (52) und des dritten Rahmens (53) aus demselben Harzmaterial gebildet sind.

5. Einzellenmodul (1) der Polymerelektrolytbrennstoffzelle nach Anspruch 1, wobei das Schmelzbonden des ersten Rahmens (51), des zweiten Rahmens (52) und der Elektrolytmembran (2) durch Ultraschallschweißen ausgeführt wird.

6. Einzellenmodul (1) der Polymerelektrolytbrennstoffzelle nach Anspruch 1, wobei das Schmelzbonden des ersten Rahmens (51), des zweiten Rahmens (52) und der Elektrolytmembran (2) unter Verwendung eines Lasers ausgeführt wird.

7. Einzellenmodul (1) der Polymerelektrolytbrennstoffzelle nach Anspruch 6, wobei ein für das Schmelzbonden verwendeter Laserstrahl eine Wellenlänge hat, die es dem Laserstrahl ermöglicht, durch den ersten Rahmen (51) oder den zweiten Rahmen (52) zu passieren und von der Elektrolytmembran (2) absorbiert zu werden.

8. Polymerelektrolytbrennstoffzelle (200), die durch das Aufeinanderstapeln einer Vielzahl von Zellmodulen (1) zusammengesetzt wird, wobei jedes Modul (1) durch die Merkmale aus Anspruch 1 gekennzeichnet wird.

## Revendications

1. Module à cellule unique (1) pour pile à combustible à membrane électrolyte polymère, possédant une structure de membrane électrolyte (11) dans laquelle une partie périphérique extérieure d'une membrane électrolyte (2) est enserrée entre un premier châssis (51) et un deuxième châssis (52), et une paire de séparateurs (6) entre lesquels la structure de membrane électrolyte (11) est enserrée,
des parties de soudage (8) étant formées dans une surface d'un châssis parmi le premier châssis (51) et le deuxième châssis (52) de manière à pénétrer à travers la membrane électrolyte (2) et à atteindre l'autre châssis parmi le premier châssis (51) et le deuxième châssis (52),
des éléments d'étanchéité (7) faisant partie des séparateurs (6) et étant disposés sur les deux surfaces des premier châssis (51) et deuxième châssis (52), et
les éléments d'étanchéité (7) étant positionnés entre les parties de soudage (8) et une région de génération de courant (12),
**caractérisé en ce que**
les parties de soudage (8) sont configurées pour souder le premier châssis (51), le deuxième châssis (52) et la membrane électrolyte (2), et sont placées dans des positions situées sur la périphérie extérieure de la membrane électrolyte (2).

2. Module à cellule unique (1) de la pile à combustible à membrane électrolyte polymère selon la revendication 1, les matériaux du premier châssis (51), du deuxième châssis (52) et de la membrane électrolyte (2) étant mélangés dans les parties de soudage (8).

3. Module à cellule unique (1) de la pile à combustible à membrane électrolyte polymère selon la revendication 1, les parties de soudage (8) étant recouvertes par un troisième châssis (53).

4. Module à cellule unique (1) de la pile à combustible à membrane électrolyte polymère selon la revendication 3, au moins deux châssis parmi le premier châssis (51), le deuxième châssis (52) et le troisième châssis (53) étant constitués du même matériau en résine.

5. Module à cellule unique (1) de la pile à combustible à membrane électrolyte polymère selon la revendication 1, la liaison par fusion du premier châssis (51), du deuxième châssis (52) et de la membrane électrolyte (2) étant réalisée par soudage par ultrasons.

6. Module à cellule unique (1) de la pile à combustible à membrane électrolyte polymère selon la revendication 1, la liaison par fusion du premier châssis (51), du deuxième châssis (52) et de la membrane électrolyte (2) étant réalisée à l'aide d'un laser.

7. Module à cellule unique (1) de la pile à combustible à membrane électrolyte polymère selon la revendication 6, le rayon laser utilisé pour la liaison par fusion ayant une longueur d'onde permettant au rayon laser de traverser le premier châssis (51) ou le deuxième châssis (52) et d'être absorbé par la membrane électrolyte (2).

8. Pile à combustible à membrane électrolyte polymère (200) assemblée par empilage d'une pluralité de modules cellulaires (1), chacun des modules cellulaires (1) présentant les caractéristiques décrites dans la revendication 1.
